# EUROPEAN PATENT APPLICATION

(11) **EP 4 830 994 A1**
(43) Date of publication of application: **28.10.2026**
(21) Application number: 26174431.2
(22) Date of filing: 24.04.2026
(51) Int. Cl.: B60N 2/28

(54) **CHILD RESTRAINT SYSTEM WITH BREAKAWAY BELT GUIDES**

(30) Priority: 24.04.2025 US 202563794116 P; 07.11.2025 US 202563913579 P
(71) Applicant: Wonderland Switzerland AG, 6312 Steinhausen (CH)
(72) Inventor: TAYLOR, Andrew J., 6312 Steinhausen (CH); HARTENSTINE, Zachary C., 6312 Steinhausen (CH); EGGERT-CROWE, Colin F., 6312 Steinhausen (CH)
(74) Representative: Haseltine Lake Kempner LLP

(57) **Abstract**

The present disclosure is directed towards child restraint system for a vehicle, comprising a child seat; a base; and a belt guide mounted to at least one of the child seat and the base, the belt guide configured to retain a vehicle belt when the child restraint system is installed in the vehicle, the belt guide having a force dissipation element configured to dissipate crash forces applied to the vehicle belt during a crash event.

## Description

### TECHNICAL FIELD

Embodiments of the present disclosure relate to child restraint systems for use in a vehicle, and more particularly to child car seats having belt guides for retaining a vehicle belt.

### BACKGROUND

Some child car seats currently available on the market have multiple use configurations that allow for the seats to continue to be used as a child grows. For example, some child car seats can be selectively used in any one or more of: (1) a rear facing, reclined configuration for infants, (2) a forward facing, reclined configuration for toddlers, (3) a forward facing, high-back booster configuration for children weighing between, e.g., 40 pounds and 100 pounds, and (4) a forward facing, backless booster configuration for children weighing between, e.g., 40 pounds and 120 pounds.

Child safety seats can include various features for impact protection, which may include features directed to improving frontal impact performance, side impact performance, both types of impact, and/or other types of impacts, crash tests, etc. Conventional child car seats use the inherent stiffness and geometry of the seat to absorb and channel forces from the vehicle to the child. Most do not include any intentional crash force dissipation to limit the peak force on the occupant. In other words, conventional child car seats may not absorb or dissipate crash forces before they are transferred to the child.

### SUMMARY

An embodiment includes a child restraint system for a vehicle. The child restraint system includes a child seat, a base, and a belt guide mounted to at least one of the child seat and the base. The belt guide is configured to retain a vehicle belt when the child restraint system is installed in the vehicle. The belt guide has a force dissipation element configured to dissipate crash forces applied to the vehicle belt during a crash event.

In the embodiment above, the force dissipation element of the belt guide is an energy absorbing component.

In the embodiment above, the force dissipation element of the belt guide is a breakable component.

In the embodiment above, the force dissipation element of the belt guide is a bendable component.

In the embodiment above, the force dissipation element divides the belt guide into a first region defining a pre-crash location of a vehicle belt, and a second region defining a post-crash location of a vehicle belt, where the vehicle belt is movable to the second region after the force dissipation element is modified when force applied to the vehicle belt during the crash event exceeds a threshold force level.

In the embodiment above, the force dissipation element is configured to, in response to application for a threshold force level to the vehicle belt, cause the belt guide to transition from a first configuration, where the vehicle belt is held in place in the belt guide in a pre-crash location, and a second configuration, where at least a portion of the belt guide is in a post-crash location that is different from the pre-crash location.

In the embodiment above, the force dissipation element is tethered to at least one of the child seat and the base.

In the embodiment above, the child seat includes one or more static belt guides that do not have the force dissipation element.

In the embodiment above, the child seat is rotatably attached to the base.

In the embodiment above, the base is permanently attached to the child seat.

In the embodiment above, the child restraint system may include a harness assembly for restraining a child within the child seat.

Another embodiment includes a child restraint system. The child restraint system also includes a base configured for attachment to a seat in a vehicle, a child seat connectable to the base, the child seat having a seat portion and a seat back panel, and a belt guide carried by at least one of the base and the child seat. The belt guide has a force dissipation element and the force dissipation element is responsive to a threshold force level to cause movement, deformation, or break of the belt guide or a portion of the belt guide.

In the embodiment above, the belt guide has an engagement element coupled to the at least one of the base and the child seat, and a belt receiver that extends from the engagement element to receive a vehicle belt, where the force dissipation element couples the engagement element to the at least one of the base and the child seat.

In the embodiment above, the force dissipation element is a tether assembly having a first end coupled to the engagement element and a second end coupled to at least one of the base or the child seat.

In the embodiment above, the tether assembly has a tether and opposed first and second bulbous ends, with a first bulbous end fitting inside an orifice formed in the engagement element and the second bulbous end is configured to be fixed to the at least one of the base and the child seat.

In the embodiment above, a portion of the tether is spooled in a cavity of the base.

In the embodiment above, the engagement element includes at least one ridge that conforms to at least one receptacle in the base or the child seat.

In the embodiment above, the belt guide has a first configuration, where the engagement element is received by the receptacle and the belt receiver overlies a surface of the base, and a second configuration, when force is applied a vehicle belt exceeds a threshold force level and the engagement element is located outside of the receptacle but is still tethered to the base via the tether assembly.

In the embodiment above, the belt receiver is an elongated plate that extends at an angle relative to the engagement element to receive a belt.

In the embodiment above, the belt guide is an elongated plate attachable to an outer surface of the at least one of the base and the child seat.

In the embodiment above, the elongated plate is configured to flex the flange away from the base when force applied to the belt exceeds a threshold force level.

In the embodiment above, the belt guide has a belt guide body with an engagement element configured to form fit within a receptacle of the at least one of the base and the child seat.

In the embodiment above, the engagement element includes at least one ridge that conforms to at least one receptacle in the base or the child seat.

In the embodiment above, the belt guide includes a base plate, an outer plate that extends over the base plate, and the force dissipation element releasably couples the outer plate to the base plate.

In the embodiment above, the belt guide has a first configuration, where the engagement element is received by the receptacle and belt receiver overlies a surface of the base, and a second configuration, when the force applied to the belt exceeds a threshold force level, the force dissipation element breaks, allowing the belt to travel upwardly.

In the embodiment above, the child seat includes one or more static belt guides that do not have the force dissipation element. The child seat is rotatably attached to the base.

In the embodiment above, the base is permanently attached to the child seat.

In the embodiment above, the child restraint system may include a harness assembly for restraining a child within the child seat.

### BRIEF DESCRIPTION OF THE DRAWINGS

The foregoing summary, as well as the following detailed description of illustrative embodiments of the present application, will be better understood when read in conjunction with the appended drawings. For the purposes of illustrating the present application, there is shown in the drawings illustrative embodiments of the disclosure. It should be understood, however, that the application is not limited to the precise arrangements and instrumentalities shown. In the drawings:
Figure 1 is a perspective view of a child restraint system according to an embodiment of the present disclosure, with softgoods removed for illustrative purposes;
Figure 2 is a side view of the child restraint system shown in Figure 1;
Figure 3 is a front view of a base of the child restraint system shown in Figure 1, illustrating a child seat detached from the base;
Figure 4 is a perspective view of a force dissipation element used in the child restraint system shown in Figure 1, according to an embodiment of the present disclosure;
Figure 5 is a bottom perspective view of the force dissipation element shown in Figure 4;
Figure 6 is a perspective view of the child restraint system shown in Figure 1, illustrating a force dissipation element activated in response to a crash event;
Figure 7 is a rear perspective view of a portion of the base of the child restraint system shown in Figure 1, illustrating how the force dissipation element is coupled to the base;
Figure 8 is another perspective view of a portion of the base of the child restraint system shown in Figure 1, illustrating another view of how the force dissipation element is coupled to the base;
Figure 9 is a front view of a force dissipation element for use on a child restraint system according to another embodiment of the present disclosure;
Figure 10 is a side view of the force dissipation element shown in Figure 9;
Figure 11 is a perspective view of the force dissipation element shown in Figure 9, coupled to the base of a child restraint system, illustrating the vehicle belt in a pre-crash configuration;
Figure 12 is a side view of the force dissipation element shown in Figure 9, coupled to the base of a child restraint system, illustrating the vehicle belt in a pre-crash configuration;
Figure 13 is a perspective view of the force dissipation element shown in Figure 9, coupled to the base of a child restraint system, illustrating the vehicle belt in a post-crash configuration;
Figure 14 is a front perspective view of the force dissipation element shown in Figure 9, coupled to the base of a child restraint system, illustrating the vehicle belt in a post-crash configuration;
Figure 15 is a side view of a force dissipation element for use on a child restraint system according to another embodiment of the present disclosure;
Figure 16 is a perspective view of the force dissipation element shown in Figure 15, coupled to the base of a child restraint system, illustrating the vehicle belt in a pre-crash configuration;
Figure 17 is a side view of the force dissipation element shown in Figure 15, coupled to the base of a child restraint system, illustrating the vehicle belt during a crash event;
Figure 18 is a perspective view of the force dissipation element shown in Figure 15, coupled to the base of a child restraint system, illustrating the vehicle belt in a post-crash configuration;
Figure 19A is a perspective view of an infant car seat including belt guides according to an embodiment of the present disclosure;
Figure 19B is a side view of the infant car seat shown in Figure 19A;
Figure 20 is a perspective of another infant car seat including a belt guide according to an embodiment of the present disclosure;
Figure 21 is a side view of a convertible car seat including one or more belt guides according to an embodiment of the present disclosure; and
Figure 22 is a side view of a booster seat including one or more belt guides according to an embodiment of the present disclosure.

### DETAILED DESCRIPTION

Embodiments of the present disclosure include a child restraint system positionable on a vehicle seat that includes one or more belt guides that include one or more force dissipation elements designed to reduce the amount of impact force on a child during a crash event, such as an impact collision. The systems and components as described here increase the protection of a child in a car from an impact collision. For example, such systems and components may reduce head injury criterion (HIC) values and/or other measurable results on an anthropomorphic testing device (ATD) during standardized crash testing.

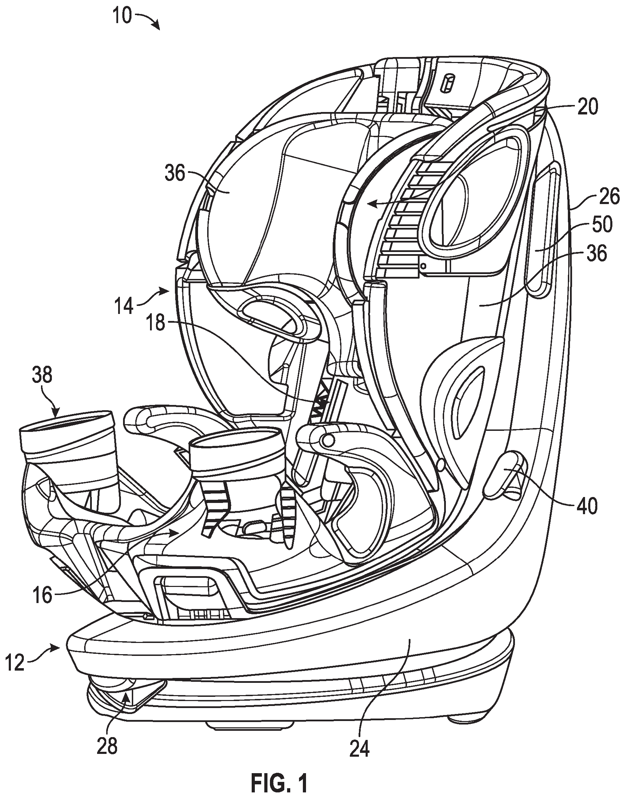

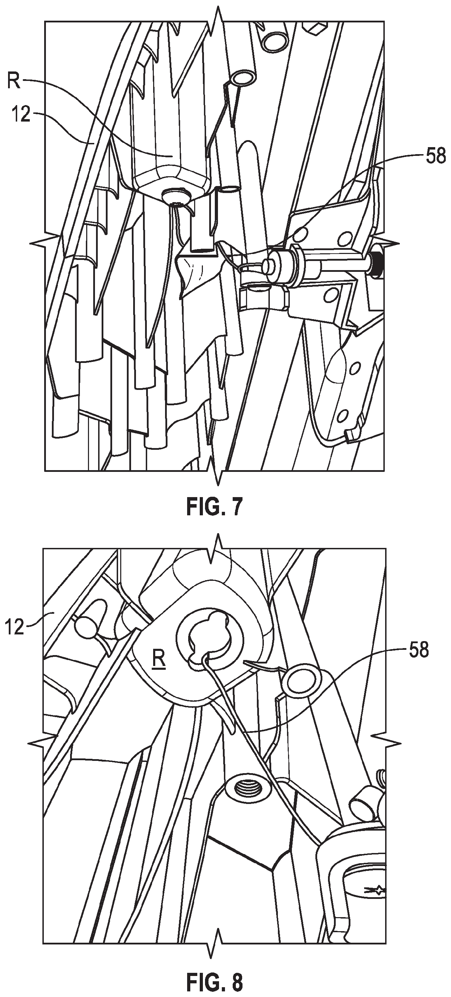

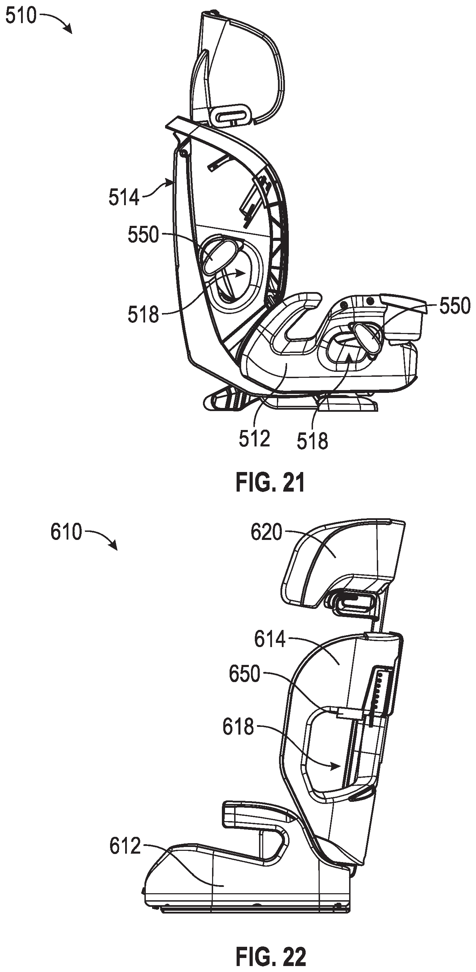

Embodiments of child restraint systems disclosed herein may be components of a car seat assembly configured to be installed within a vehicle, such as a car, minivan, sport utility vehicle, truck, or still other type of vehicle. In embodiments, the car seat assembly includes a car seat connected to a base. The base can be anchored or otherwise secured to a vehicle seat of the vehicle. The car seat can be mounted on and secured (either removably or fixed) to the base. In embodiments, the car seat assembly includes a car seat usable without a base, e.g. placed on a vehicle seat and connected to the vehicle seat by isofix anchors (e.g., LATCH, tether, etc.) and/or a vehicle seatbelt. In embodiments, the car seat assembly includes an infant car seat (ICS) (Figs. 1A-20), convertible car seat (CCS) (Fig. 21) that may be rotatable (or not rotatable), a booster seat (high-back and/or no back) (Fig. 22), and the like.

As shown in Figures 1-2, embodiments of the present disclosure include a child restraint system 10 having a support base 12 and a car seat 14 (or child seat) associated with the base 12. The car seat 14 includes a seat 16, a seat back panel (or assembly) 18, and a headrest 20 that is movable relative to the back panel 18. The system 10 includes one or more belt guides 50 that include force dissipation elements 58. In addition, the system includes one or more static belt guides 40 that do not include force dissipation elements 58 as described herein. The static belt guides 40 may be referred to as lap belt guides.

Referring to Figures 1-3, the support base 12 can be detachably fixed to a vehicle seat, such as via a latch or anchor mechanism, not shown in the figures. This latch or anchor system often used is sometimes referred to as a "lower anchor and tether for children" e.g., LATCH system. Alternatively, or in addition, the support base 12 may be detachably fixed to a vehicle seat via a vehicle belt associated with the vehicle seat. Furthermore, the child seat can be connected to the support base 12, either permanently, or detachably so that the child seat can be removed from the base 12 as needed. The support base 12 includes a base seat portion 24 and a base back portion 26. The base seat portion 24 and the base back portion 26 may be formed monolithically or formed as separate components that are coupled together. In some instances, the base 12 may include the base seat portion 24 and may exclude the base back portion 26. The support base 12 itself may be formed from rigid polymeric materials, including thermoplastics, thermosets, combinations of both, or composite materials. In the embodiment shown, the belt guide 50 is carried by and coupled to the base 12. In other variations, however, the belt guide 50 could be coupled to the car seat 14.

The child restraint system 10 may be configured to allow rotation and/or inclination of the child seat 14 relative to the support base 12. For example, the system 10 may include an incline actuator 28 located along the support base 12 to control inclination of the child seat 14 about an inclination axis (not shown) that is generally perpendicular to the support base 12 when installed in the vehicle. Actuation of the inclination actuator 28 causes the child car seat 14 to incline about an incline axis relative to the base 12.

The child restraint system 10 may also include a rotation actuator 30 configured to rotate the child seat 14 relative to the base 12. For example, the system 10 may include the rotation actuator 30 located along the child seat 14 that controls rotations of the child seat 14 about a rotation axis (not shown) that generally intersects the support base 12 when installed in the vehicle. Actuation of the rotation actuator (not numbered) causes the child seat 14 to rotate about the rotation axis relative to the base 12. Various features, elements, and implementations of the inclination actuator 28 and the rotation actuator 30 and related components of the child seat 14 and base 12 are disclosed in WO 2024/206806, the contents of which are incorporated by reference into the present disclosure.

Referring to Figures 1-2, the car seat 14 includes the seat 16, the seat back panel (or assembly) 18, and the headrest 20 that is movable relative to the back panel 18. The car seat 14 may include softgoods attached thereto, which could include foam materials and textiles, such as woven and/or knit goods. Figures 1-7 do not illustrate the softgoods but the system 10 could include softgoods as needed. The car seat 14 includes side impact protection panels 36 on either side of the back panel 18. One or more cup holders 38 are on the seat 16. The child seat 14 may include a harness assembly (not shown) that includes two shoulder straps connectable to at least one crotch strap via a buckle.

Referring to Figures 1-3, the car seat 14 includes a headrest assembly that is movably coupled to the seat back panel 18. The headrest assembly includes the headrest 20, a headrest actuator (not shown) and coupling members (not shown) that movably couple the headrest 20 to the back panel 18. Here, actuation of the actuator 28 causes the headrest 20 to move among any one of the plurality of positions relative to the seat back panel 18. The coupling members may include various devices, such as tracks, projections, bias members and the like that couple the headrest 20 to the back panel 18 and the actuator 28 so that the headrest 20 can move as needed via actuation of the actuator 28. For example, the actuator 28 may be coupled to a linkage (not shown) that can selectively release a lock from a track disposed along the back panel 18. Actuation of the actuator 28 can release the lock so that the headrest 20 can be moved up or down relative to the back panel 18. The headrest assembly and the headrest 20 may be similar to that described in WO 2024/206806, the contents of which are incorporated by reference into the present disclosure. While an adjustable headrest is shown, the headrest 20 may be fixed to the child seat 14 as needed.

In some embodiments, a child restraint system 10 may generally include a first booster portion and a second booster portion, and in an embodiment, the seat back portion may be considered the first booster portion, and the seat pan portion may be considered the second booster portion. The first booster portion may but need not be configured to removably couple to the second booster portion. In other embodiments, the child restraint system 10 may be configurable as a booster seat. For example, in embodiments where both the seat portion and the seat back portion are separable from the support base 12, the child restraint system 10 is forward-facing and may be arranged in direct contact with a vehicle seat.

Belt guides 50 are used to keep the vehicle belt properly positioned and tensioned on the child seat 14, thus preventing movement of the car seat 14 in the vehicle. Embodiments of the present disclosure include one or more belt guides 50 on the support base 12 and/or child car seat 14 that receives a vehicle belt (shoulder strap, lap belt, or the like). The belt guides 50 described herein include one or more force dissipation elements 58 that are configured to permit movement, deformation, and/or breaking during a crash event. For example, the belt guides 50 could break away from the car seat base, be semi-flexible, include a weakened feature, which breaks upon impact, or the like. The belt guides 50 could include an energy absorbing component, a breakable component, or a bendable component. During a crash event, the belt guide 50 receives high loading as it holds the vehicle belt tensioned and bunches toward one side of the belt guide 50. To limit the peak forces on the occupant, the force dissipation elements 58 are designed to dissipate crash forces from the vehicle belt. In this regard, the force dissipation elements 58 may be referred to by various other terms, such as ("weakened feature," "flexible member," "frontal impact protection component," "energy absorbing element," or the like). Thus, while initially the vehicle belt is in a blocked guide, after a certain amount of force or threshold force level, is reached, the force dissipation element 58 is activated (e.g., breaks, deforms, etc.). More specifically, the force dissipation element 58 is responsive to a threshold force level to cause movement, deformation, or break of the belt guide 50 or a portion of the belt guide 50. The deformation and/or breaking of the belt guide 50 absorbs energy and increases the time that energy is transferred into the ATD or child occupant, which reduces the peak accelerations.

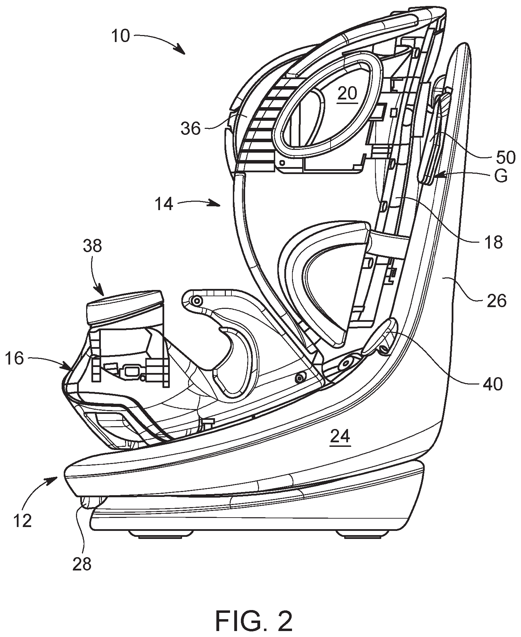

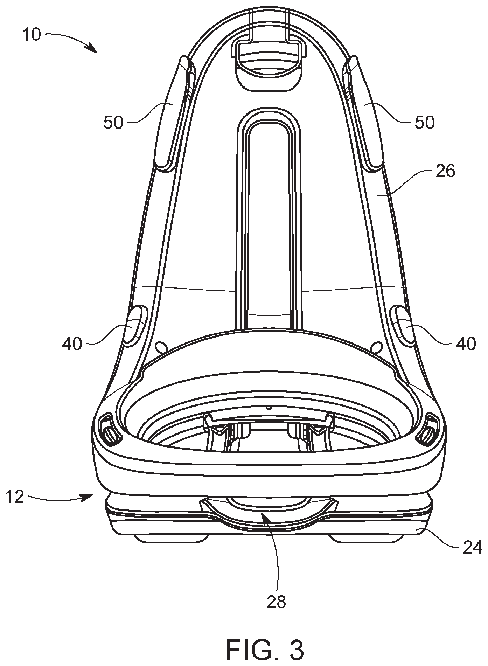

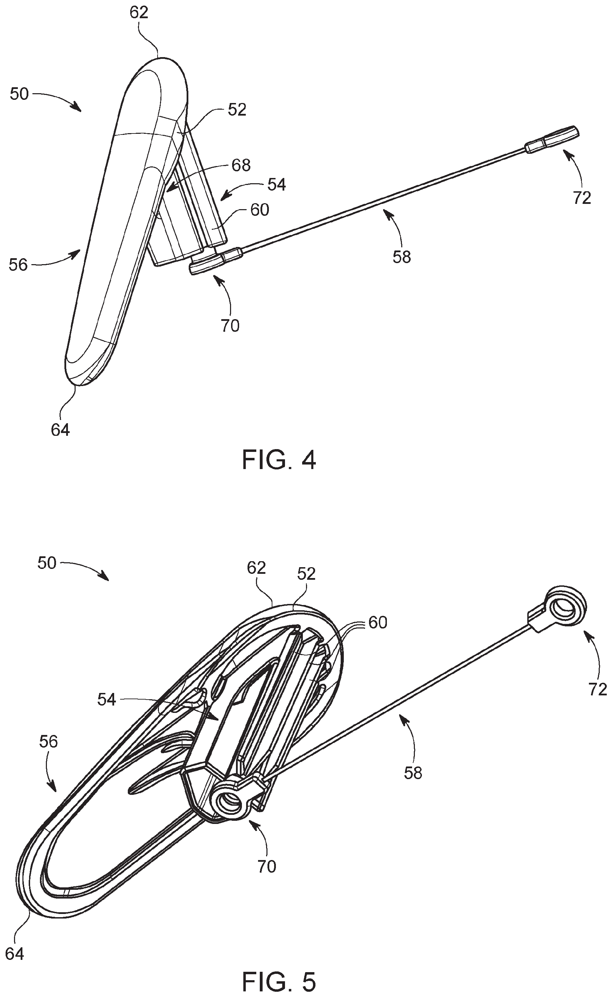

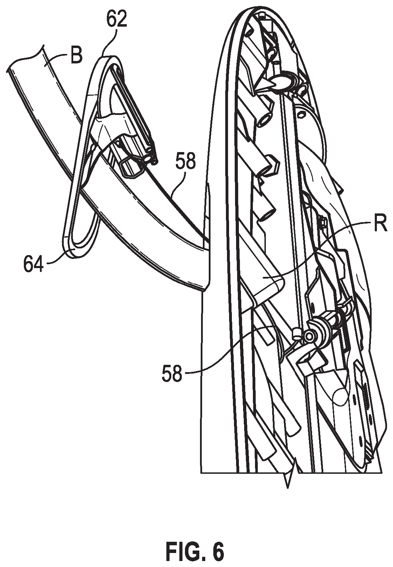

Referring to Figures 3 and 4, a belt guide 50 according to an embodiment is shown. The belt guide 50 includes a belt guide body 52. The belt guide body 52 defines an engagement element 54 coupled to the base 12, a belt receiver 56 that extends from the engagement element 54, and the force dissipation element 58 that couples the engagement element 54 to the base 12 and (or the child seat 14). The engagement element 54 is configured to form fit within a receptacle R (Fig. 6) on the base. The engagement element 54 includes at least one ridge 60 that conforms to at least one channel (not numbered) in the receptacle R of the base 12. There could be one ridge 60 or several ridges as needed. The ridges 60 help secure the belt guide 50 in place and prevent unwanted rotation of the belt guide 50. However, the ridges 60 are generally linear so that the engagement element 54 can slide out of the receptacle R of the base 12 in response to a threshold force level during a crash event. The belt receiver 56 has an upper end 62 (or first end 62) and a lower end 64 (or second end 64) with a lower facing surface 66. The belt receiver 56 is thus an elongated flap that extends at an angle relative to the engagement element 54 to receive a belt B with the lower surface 66 defining a gap G (Fig. 2) with respect to the base 12. This angle allows the belt guide 50 to generally track the slope of the base 12 where the belt guide 50 is secured. The belt receiver 56 thus extends over a surface of the base 12 to form the gap G that receives the belt therein. Furthermore, a gap apex 68 is defined at a location where the receiver 56 couples the belt receiver 56 in the gap G.

The force dissipation element 58 may be configured as a tether assembly having a first end 70 coupled to the engagement element 54 and a second end 72 coupled to the base 12 or (the child seat 14). In the embodiment shown, the tether assembly has a tether 76 and opposed first and second bulbous ends, one of which fits inside an orifice formed in the engagement element 54 and the other of which is configured to be fixed to the base 12 (as shown Fig. 6). As shown, the tether 76 can be spooled in a cavity in the base 12 when in a use configuration (Fig. 3). The tether 76 can be a braid, cable, wire, strip, or other elongated structure with a tensile strength that exceeds the expected forces applied to the belt during a crash event. Furthermore, the tensile force should exceed the force required to pull the belt guide 50 out of the receptacle R.

Referring to Figures 3-8, the belt guide 50 has a first (or use) configuration, where the belt guide 50 is coupled to the base 12 in a receptacle R and the tether assembly is spooled, and a second configuration, where a force applied to the belt B exceeds a threshold force level, the tether assembly unspools, thereby absorbing/dissipating forces as the belt guide 50 is released from the receptacle R. More specifically, during a crash event, the belt B rides up the gap G into contact with the gap apex 68. When forces applied at this point exceed the forces required to keep the belt guide 50 coupled to the base 12, the belt guide 50 is released, as shown in Figure 6. The tether assembly, however, unspools permitting the belt guide 50 to move away or break away from the base 12 while an end of the tether assembly, being fixed to the base 12, keeps the belt guide 50 attached to the base 12. In other words, the belt guide 50 has a first configuration, wherein the engagement element 54 is received by the receptacle R and the belt receiver 56 overlies the surface of the base 12, and a second configuration, when the force applied to the belt B exceeds a threshold force level and the engagement element 54 is located outside of the receptacle R but is still tethered to the base 12 via the tether assembly. Accordingly, one or more belt guides 50 may be tethered to the base 12 such that, during a crash, the guides 50 may break away from the base 12. The tether assembly thus prevents the belt guide 50 from becoming a projectile after breaking away.

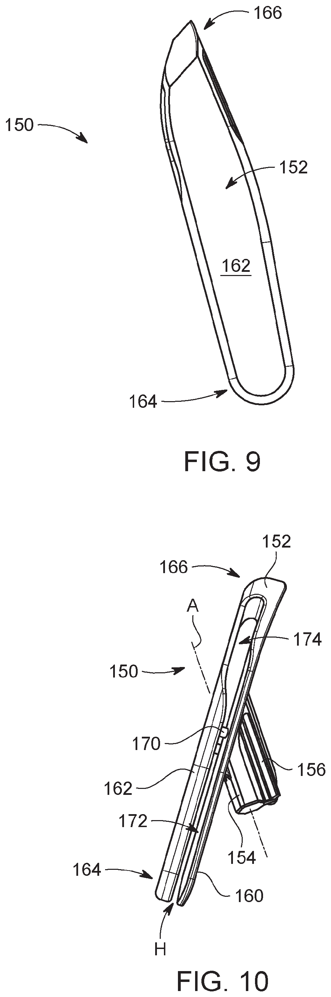

Figures 9-14 illustrate a belt guide 150 according to another embodiment of the present disclosure. The belt guide 150 has a belt guide body 152 with an engagement element 154 configured to form fit within a receptacle R on the base 12 and a belt receiver 158. The engagement element 154 includes at least one ridge 156 that conforms to at least one receptacle in the base 12 (or child seat 14). As discussed elsewhere, the engagement element 154 includes multiple ridges 156 that aid in securing the belt guide 150 in place.

Continuing with Figures 9-14, the belt receiver 158 includes a base plate 160, an outer plate 162 that extends over the base plate 160, a first end 164 and a second end 166. The first end 164 of the belt guide 150 includes a gap H and the second end 166 couples the outer plate 162 to the base plate 160. The belt guide 150 includes one or more force dissipation elements 170 located at a mid-region of the belt receiver 158. The second end 166 couples an inward facing surface of the outer plate 162 to an outward facing surface of the base plate 160. The force dissipation element 170 divides the belt guide 150 into a first region 172 defining a pre-crash location of a vehicle belt B, and a second region 174 defining a post-crash location of a vehicle belt B. The vehicle belt B is movable from the first region 172 into the second region 174 after the force dissipation element 170 is modified, e.g. broken, bent, etc., when force applied to the vehicle belt B during the crash event exceeds a threshold level of force. In the example shown, the force dissipation element 170 is aligned with the engagement element 154 along an axis A that is transverse to the base plate 160 and the outer plate 162. This angle defined by the axis A and the base plate 160 allows the belt guide 150 to generally track the slope of the base 12 where the belt guide 150 is secured.

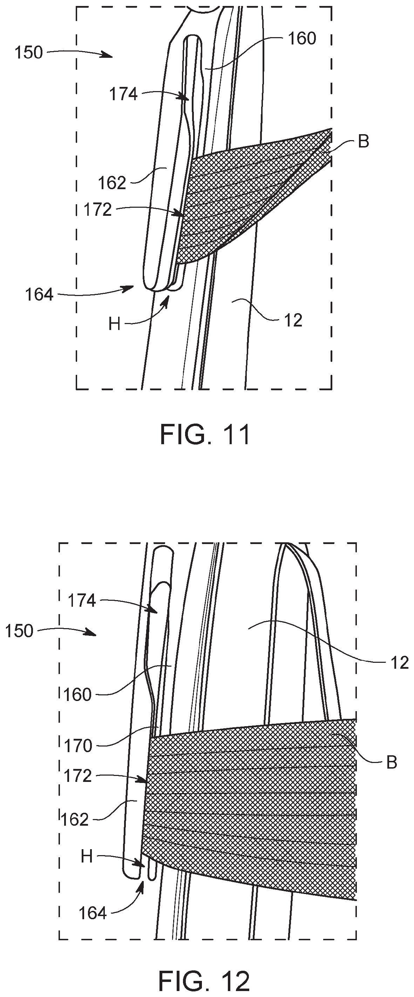

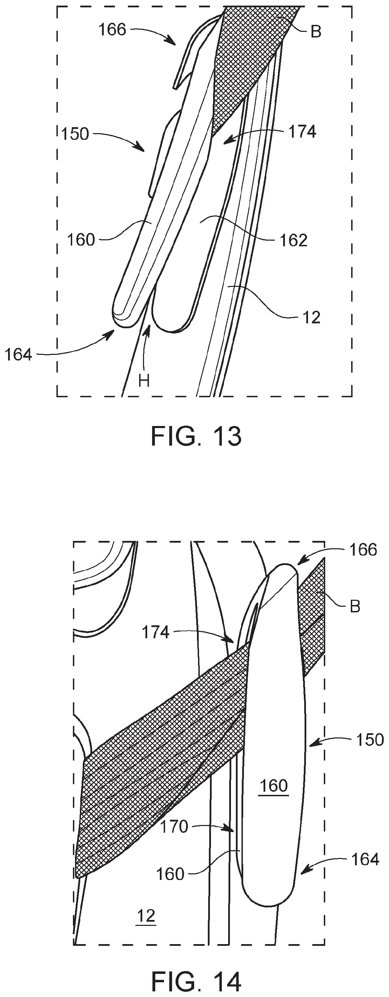

In use, the belt guide 150 can transition from a first configuration, as shown in Figures 11 and 12, where the belt B is in the first region 172 below the force dissipation element 170, into a second configuration, as shown in Figures 13 and 14, where force applied to the belt B (during a crash event) exceeds a threshold force level, the force dissipation element 170 breaks allowing the belt B to travel upwardly into a second (or belt receiving) region 174.

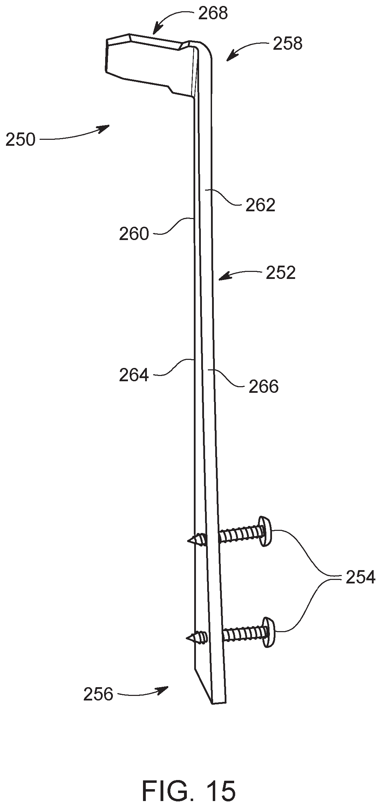

Figures 15-18 illustrate another belt guide 250 according to an embodiment of the present disclosure. The belt guide 250 may include an elongated plate 252 and one or more engagement elements 254 configured to secure the belt guide 250 to the base 12 (or child seat). The elongated plate 252 includes a lower end 256, an upper end 258 opposite the lower end 256, an inward facing surface 260, an outer surface 262 opposite the inward facing surface 260, side edges 264, 266 that extend from the lower end 256 to the upper end 258, and a flange 268 that extends outward from the plate 252 toward the base 12 (e.g. at an angle that be may perpendicular or non-perpendicular). When coupled to the base 12, the flange 268 protrudes toward and contacts the surface of the base 12. More specifically, the flange 268 and the inward facing surface 260 define a belt receiving area H with the surface of the base 12. The flange 268 in general prevents the vehicle belt B from moving out of the belt guide 250 after installation and during normal use.

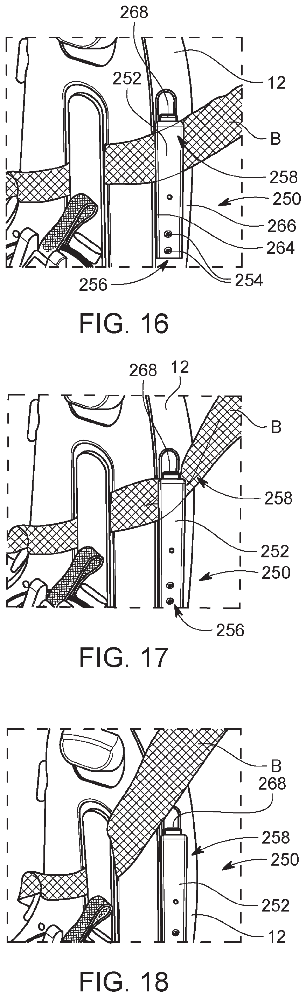

However, the plate 252 is configured to flex, in response to force applied to the belt B, to permit release of the belt B during a crash event. In this regard, the elongated plate 252 is flexible and serves as a force dissipation element. In use, the belt guide 250 has a first configuration, as shown in Figures 16 and 17, where the belt B is between the elongated plate 252 and the base 12. During a crash event when force is applied to the belt B, the belt B rides upward along the guide 250 toward the flange 268 (Fig. 17). When force is applied to the belt B (during a crash event) exceeds a threshold force level, the force dissipation element flexes, separating the tip of the flange 268 from the base 12, allowing the belt B to travel up and out of the belt guide 250.

As described above, the belt guide 250 may be provided as one or more semi-flexible belt guides. Alternatively, the belt guide 250 could be rigid with a weakening feature along the plate 252 that allows it to flex in a crash and release the vehicle belt B. In any event, at a mid-crash positioning, the vehicle belt B forces the belt guide 250 to flex as it moves to the upper edge of the belt guide 250. At a post-crash positioning, the vehicle belt B breaks away from the belt guide 250 and is therefore no longer secured in the belt guide 250.

As described above the child restraint system 10 can include one or more belt guides 50, 150, 250 secured to the base 12 (or child seat 14) that include force dissipation elements. The child restraint system 10 also includes static guides that do not include force dissipation elements. In the embodiment shown, the system 10 may include belt guides 50, 150, 250 on the left and right sides of the base 12 as well as static belt guides 40 on the left and right sides of the base 12. Thus, the system 10 includes force dissipation elements along belt guides 50, 150, 250 but not the lap belt guides. In alternative embodiments, however, the belt guides 50, 150, 250 along the shoulder region and the lap belt guides may include one or more force dissipation elements.

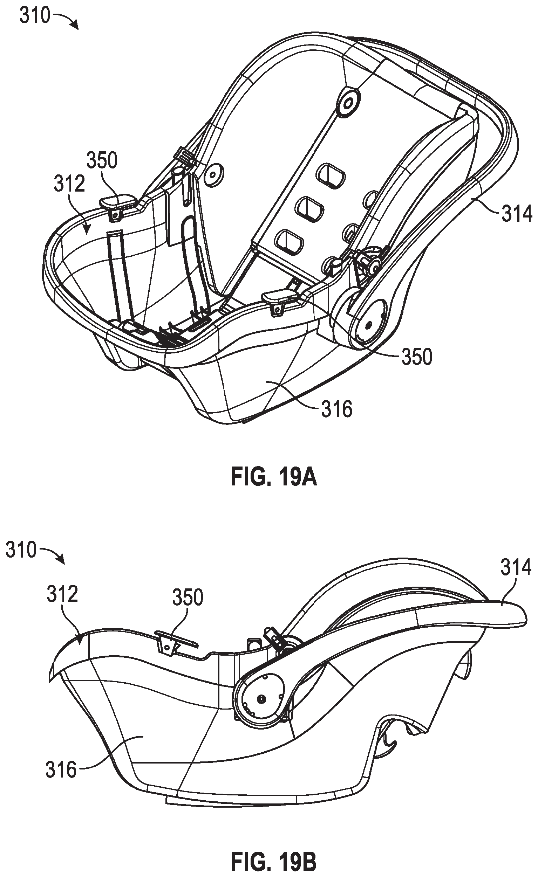

The belt guides 50, 150, 250 may be used on any type of child restraint system or car seat. Referring to Figures 19A and 19B, an infant car seat 310 that includes a seat shell 312, a handle 314 movably coupled to the seat shell 312, and sidewalls 316 forming part of the seat shell 312. The seat 310 may include a softgoods assembly. A belt guide 350 may be coupled to a top portion of the sidewalls 316 of the seat 310 as shown in Figures 19A and 19B. The belt guide 350 may be like the belt guide 50, belt guide 150, or belt guide 250 described above.

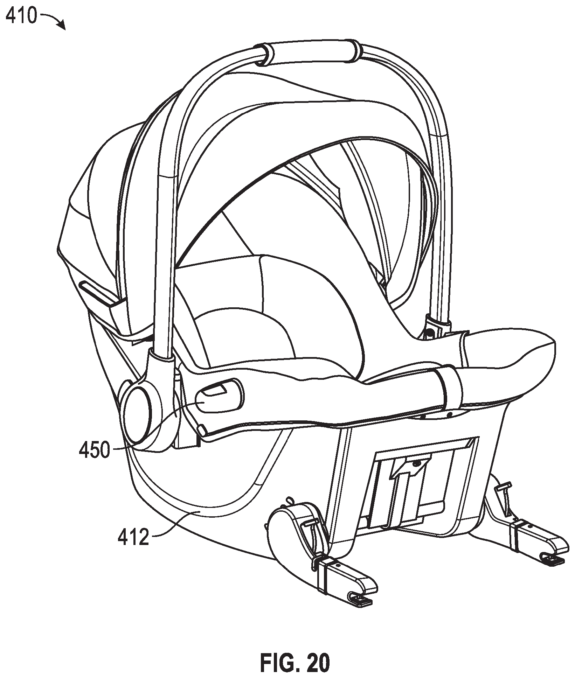

Referring to Figure 20, another embodiment includes an infant car seat 410 that includes a belt guide 450 according to an embodiment of the present disclosure coupled to the outer side of a seat shell 412. The belt guide 450 may be like belt guides 50, 150, and 250 as described above. The seat 410 could include one, two, three, or four belt guides 450.

Turning to Figure 21, a convertible car seat (CCS) 510 is shown that includes a seat 512, a seat back 514 extending up from the seat 510, and side protection panels 516 extending generally forward from a seat back 515 with belt path openings 518 extending through the side protection panels 516. An additional belt path 519 extends through a part of the seat 510. The seat 510 may include a softgoods assembly for the seat 510 and the seat back 514. In the embodiment shown in Figure 21, the seat 510 is a non-rotating seat but otherwise could have all components of the system 10 and the car seat 14 described above. The car seat 510 includes one or more belt guides 550 according to an embodiment of the present disclosure. Thus, the belt guide 550 may be like belt guides 50, 150, and 250 as described above. The seat 510 could include one, two, three, or four belt guides 550.

Referring to Figure 22, a booster seat 610 is shown that includes a seat pan 612, a seat back 614 removably coupled to the seat pan 612 and extending up from the seat 610, side protection panels 616 extending generally forward from the seat back 614 with belt path openings 618 extending through the side protection panels 616, and a headrest 620, which may be adjustable. The seat 610 may include a softgoods assembly for the seat 610 and the seat pan 612. In the embodiment shown in Figure 22, the seat 610 includes one or more belt guides 650 according to an embodiment of the present disclosure. Thus, the belt guide 650 may be like belt guides 50, 150, and 250 as described above. The seat 610 could include one, two, three, or four belt guides 650.

Certain terminology is used in the following description for convenience only and is not limiting. As used herein, the terms "forward", "rearward", "upper", and "lower" designate directions in the drawings to which reference is made. The terms "inwardly" and "outwardly" refer to directions towards and away from parts referenced in the drawings. "Axially" refers to a direction along the axis of a shaft (or centerline of an object). "Laterally" refers to a direction perpendicular to the axis of the shaft (or centerline of the object) from one side to another opposite side. A reference to a list of items that are cited as "at least one of a, b, or c" (where a, b, and c represent the items being listed) means any single one of the items a, b, or c, or combinations thereof. The term "substantially" when used in connection with, for example, a geometric relationship, a numerical value, and/or a range is intended to convey that the geometric relationship (or the structures described thereby), the number, and/or the range so defined is nominally the recited geometric relationship, number, and/or range. For example, two structures described herein as being "substantially parallel" is intended to convey that, although a parallel geometric relationship is desirable, some non-parallelism can occur in a "substantially parallel" arrangement. The terms "about" and "approximately" are to be construed to be plus or minus up to 10% of a stated value or ratio. The terminology includes the words specifically noted above, derivatives thereof, and words of similar import.

While the disclosure is described herein, using a limited number of embodiments, these specific embodiments are not intended to limit the scope of the disclosure as otherwise described and claimed herein. The precise arrangement of various elements and order of the steps of articles and methods described herein are not to be considered limiting. For instance, although the steps of the methods are described with reference to sequential series of reference signs and progression of the blocks in the figures, the method can be implemented in an order as desired. Additionally, features identified or discussed with respect to one set of figures may be additionally or alternatively applied to any other set of figures or embodiments disclosed herein.

The present invention is defined at least in part by the following numbered paragraphs:
1. A child restraint system for a vehicle, comprising:
   a child seat;
   a base; and
   a belt guide mounted to at least one of the child seat and the base, the belt guide configured to retain a vehicle belt when the child restraint system is installed in the vehicle, the belt guide having a force dissipation element configured to dissipate crash forces applied to the vehicle belt during a crash event.
2. The child restraint system of paragraph 1, wherein the force dissipation element of the belt guide is an energy absorbing component.
3. The child restraint system of any of the preceding paragraphs, wherein the force dissipation element of the belt guide is a breakable component.
4. The child restraint system of any of the preceding paragraphs, wherein the force dissipation element of the belt guide is a bendable component.
5. The child restraint system of any of the preceding paragraphs, wherein the force dissipation element divides the belt guide into a first region defining a pre-crash location of a vehicle belt, and a second region defining a post-crash location of a vehicle belt, wherein the vehicle belt is movable to the second region after the force dissipation element is modified when force applied to the vehicle belt during the crash event exceeds a threshold force level.
6. The child restraint system of any of the preceding paragraphs, wherein the force dissipation element is configured to, in response to application for a threshold force level to the vehicle belt, causes the belt guide to transition from a first configuration, where the vehicle belt is held in place in the belt guide in a pre-crash location, and a second configuration, where at least a portion of the belt guide is in a post-crash location that is different from the pre-crash location.
7. The child restraint system of any of the preceding paragraphs, wherein the force dissipation element is tethered to at least one of the child seat and the base.
8. The child restraint system of any of the preceding paragraphs, wherein the child seat includes one or more static belt guides that do not have the force dissipation element.
9. The child restraint system of any of the preceding paragraphs, wherein the child seat is rotatably attached to the base.
10. The child restraint system of any of the preceding paragraphs, wherein the base is permanently attached to the child seat.
11. The child restraint system of any of the preceding paragraphs, further comprising a harness assembly for restraining a child within the child seat.
12. A child restraint system, comprising:
   a base configured for attachment to a seat in a vehicle;
   a child seat connectable to the base, the child seat having a seat portion and a seat back panel; and
   a belt guide carried by at least one of the base and the child seat, the belt guide having a force dissipation element, wherein the force dissipation element is responsive to a threshold force level to cause movement, deformation, or break of the belt guide or a portion of the belt guide.
13. The child restraint system of paragraph 12, wherein the belt guide has an engagement element coupled to the at least one of the base and the child seat, a belt receiver that extends from the engagement element to receive a vehicle belt, wherein the force dissipation element couples the engagement element to the at least one of the base and the child seat.
14. The child restraint system of paragraph 12 or paragraph 13, wherein the force dissipation element is a tether assembly having a first end coupled to the engagement element and a second end coupled to at least one of the base or the child seat.
15. The child restraint system of any one of paragraphs 12 to 14, wherein the tether assembly has a tether and opposed first and second bulbous ends, with a first bulbous end fits inside an orifice formed in the engagement element and the second bulbous end is configured to be fixed to the at least one of the base and the child seat.
16. The child restraint system of any one of paragraphs 12 to 15, wherein a portion of the tether is spooled in a cavity of the base.
17. The child restraint system of any one of paragraphs 12 to 16, wherein the engagement element includes at least one ridge that conforms to at least one receptacle in the base or the child seat.
18. The child restraint system of any one of paragraphs 12 to 17, wherein the belt guide has a first configuration, wherein the engagement element is received by the receptacle and the belt receiver overlies a surface of the base, and a second configuration, when force applied a vehicle belt exceeds a threshold force level and the engagement element is located outside of the receptacle but is still tethered to the base via the tether assembly.
19. The child restraint system of any one of paragraphs 12 to 18, wherein the belt receiver is an elongated plate that extends at an angle relative to the engagement element to receive a belt.
20. The child restraint system of any one of paragraphs 12 to 19, wherein the belt guide is an elongated plate attachable to an outer surface of the at least one of the base and the child seat.
21. The child restraint system of any one of paragraphs 19 and 20, wherein the elongated plate includes a lower end, an upper end opposite the lower end, an inward facing surface, an outer surface opposite the inward facing surface, side edges that extend from the lower end to the upper end, and a flange that extends outward at an angle.
22. The child restraint system of paragraph 21, wherein when the elongated plate is coupled to the base, the flange protrudes toward and contacts a surface of the base.
23. The child restraint system of any one of paragraphs 12 to 22, wherein the elongated plate is configured to flex the flange away from the base when force applied to the belt exceeds a threshold force level.
24. The child restraint system of any one of paragraphs 12 to 23, wherein the belt guide has a belt guide body with an engagement element configured to form fit within a receptacle of the at least one of the base and the child seat.
25. The child restraint system of any one of paragraphs 12 to 24, wherein the engagement element includes at least one ridge that conforms to at least one receptacle in the base or the child seat.
26. The child restraint system of any one of paragraphs 12 to 25, wherein the belt guide includes a base plate, an outer plate that extends over the base plate, and the force dissipation element releasably couples the outer plate to the base plate.
27. The child restraint system of paragraph 26, wherein the belt guide has a first end that defines a gap, a second end couples the outer plate to the base plate, a first region defined between the first end and the force dissipation element, and a second region defined between the force dissipation element and the second end.
28. The child restraint system of paragraph 27, wherein a vehicle belt is movable from the first region into the second region after the force dissipation element is modified when force applied to the belt exceeds a threshold force level.
29. The child restraint system of any one of paragraphs 12 to 28, wherein the belt guide has a first configuration, wherein the engagement element is received by the receptacle and belt receiver overlies a surface of the base, and a second configuration, when the force applied to the belt exceeds a threshold force level, the force dissipation element breaks, allowing the belt to travel upwardly.
30. The child restraint system of any one of paragraphs 12 to 29, wherein the child seat includes one or more static belt guides that do not have the force dissipation element.
31. The child restraint system of any one of paragraphs 12 to 30, wherein the child seat is rotatably attached to the base.
32. The child restraint system of any one of paragraphs 12 to 31, wherein the base is permanently attached to the child seat.
33. The child restraint system of any one of paragraphs 12 to 32, further comprising a harness assembly for restraining a child within the child seat.

## Claims

1. A child restraint system for a vehicle, comprising:
a child seat;
a base; and
a belt guide mounted to at least one of the child seat and the base, the belt guide configured to retain a vehicle belt when the child restraint system is installed in the vehicle, the belt guide having a force dissipation element configured to dissipate crash forces applied to the vehicle belt during a crash event.

2. The child restraint system of claim 1, wherein the force dissipation element of the belt guide is an energy absorbing component.

3. The child restraint system of any of the preceding claims, wherein the force dissipation element of the belt guide is a breakable component.

4. The child restraint system of any of the preceding claims, wherein the force dissipation element of the belt guide is a bendable component.

5. The child restraint system of any of the preceding claims, wherein the force dissipation element divides the belt guide into a first region defining a pre-crash location of a vehicle belt, and a second region defining a post-crash location of a vehicle belt, wherein the vehicle belt is movable to the second region after the force dissipation element is modified when force applied to the vehicle belt during the crash event exceeds a threshold force level.

6. The child restraint system of any of the preceding claims, wherein the force dissipation element is configured to, in response to application for a threshold force level to the vehicle belt, causes the belt guide to transition from a first configuration, where the vehicle belt is held in place in the belt guide in a pre-crash location, and a second configuration, where at least a portion of the belt guide is in a post-crash location that is different from the pre-crash location.

7. The child restraint system of any of the preceding claims, wherein the force dissipation element is tethered to at least one of the child seat and the base.

8. The child restraint system of any of the preceding claims, wherein the child seat includes one or more static belt guides that do not have the force dissipation element.

9. The child restraint system of any of the preceding claims, wherein the child seat is rotatably attached to the base.

10. The child restraint system of any of the preceding claims, wherein the base is permanently attached to the child seat.

11. The child restraint system of any of the preceding claims, further comprising a harness assembly for restraining a child within the child seat.
